# EUROPÄISCHE PATENTSCHRIFT

(11) **EP 1 378 965 B1**
(45) Veröffentlichungstag und Bekanntmachung des Hinweises auf die Patenterteilung: **04.05.2005**
(21) Anmeldenummer: 03002345.1
(22) Anmeldetag: 04.02.2003
(51) Int. Cl.: H01R 9/26

(54) **Elektrotechnisches Gerät zum Einbau in Installationskleinverteiler**
Electrical apparatus for mounting in an installation cabinet
Appareil électrique pour le montage dans un cabinet de distribution

(30) Priorität: 04.07.2002 DE 20210333 U
(43) Veröffentlichungstag der Anmeldung: 07.01.2004
(73) Patentinhaber: Wilhelm Rutenbeck GmbH & Co, 58579 Schalksmühle (DE)
(72) Erfinder: Riccardi, Oliver, 58579 Schalksmühle (DE)
(74) Vertreter: Köchling, Conrad-Joachim, Dipl.-Ing.

(56) Entgegenhaltungen:
- EP-A- 0 499 660
- WO-A-02/23676
- US-B1- 6 324 063

## Beschreibung

Die Erfindung betrifft ein elektrotechnisches Gerät zum Einbau in Installationskleinverteiler, insbesondere Gerät der Schwachstromtechnik wie Datentechnik, Fernmeldetechnik, Alarm- und Signaltechnik, vorzugsweise in Form eines Patch-Panel, wobei der Installationskleinverteiler Normschienen, insbesondere Hutschienen, zur Halterung von Einbaugeräten aufweist sowie eine frontseitige Abdeckung mit fensterartigen Ausnehmungen, wobei das Gerät vollständig mit Kunststoff ummantelt ist, insbesondere in ein den Mantel bildendes Kunststoffgehäuse eingesetzt ist, wobei lediglich Installations-, Anschluss- oder Stecköffnungen in der Frontseite des Mantels angespart sind, hinter denen Anschlussteile, z.B. Klemmen oder vorzugsweise Steckbuchsen angeordnet sind, wobei Klappen oder Schieber am Mantel angeordnet sind, mittels derer die Öffnungen verschließbar oder abdeckbar sind, und der die Öffnungen und Schieber oder Klappen aufweisende Teilbereich der Frontseite des Mantels so geformt und dimensioniert ist, dass das Fenster der frontseitigen Abdeckung des Installationskleinverteiler vollständig von diesem Bereich gefüllt ist, dadurch gekennzeichnet, dass der Mantel durch ein Gehäuseunterteil und ein Gehäuseoberteil gebildet ist, wobei die Gehäuseteile an der Trennstelle einander überlappende, eine Art Labyrinth bildende Wandteile aufweisen.

In der Netzwerktechnik sind eine Vielzahl aktiver und passiver Komponenten bekannt, welche normalerweise in speziell dafür hergestellten Datenverteilerschränken installiert werden. Diese Datenverteilerschränke werden zusätzlich zur ohnehin vorgesehenen Elektrounterverteilung installiert, teilweise in eigens dafür geschaffenen Räumen. Der Zugang dieser Datenschränke unterliegt keinen sicherheitstechnischen Aspekten. Da mit Einzug der Netzwerke auch in kleine und mittlere Anwendungen diese Datenschränke vielfach zu groß für den entsprechenden Anwendungsfall sind und somit der erforderliche Aufwand in keinem Verhältnis zum erzielbaren Nutzen steht, besteht ein Bedarf dahin, die erforderlichen Komponenten in Installationsumgebung einzubinden, die in diesem Anwendungsfeld ohnehin vorliegen, wie beispielsweise die Elektrounterverteilung (Normbezeichnung: Installationskleinverteiler für Geräte bis 63 A nach DIN 43871).

Hierfür sind schon Lösungen vorgeschlagen worden, die aber nur dann in der Unterverteilung eingesetzt werden dürfen, wenn hier keine weiteren 230 Volt-Geräte zur Energieverteilung installiert sind, wie beispielsweise Leitungsschutzschalter, Fehlerstromschutzschalter oder dergleichen. Bedingt ist dies durch die den Geräten fehlende Schutzisolierung, die bei Verwendung von Datengeräten und Geräten mit Schutzkleinspannung sowie von 230 Volt-Komponenten nach der Bestimmung VDE 0100 zwingend erforderlich ist. In der Regel handelt es sich dabei um eine Modifizierung von Geräten, die mittels Adaptern für diese Einbausituation manipuliert werden. Häufig wird dabei ebenfalls der übliche Normabstand der in der Unterverteilung vorhandenen genormten Schienen (auch Hutschienen genannt) nicht eingehalten, so dass zusätzlicher Installationsaufwand erforderlich wird, um mehrere Geräte in die Unterverteilung integrieren zu können. Auch passen dann die handelsüblichen Abdeckungen nicht mehr auf diese Geräte, so dass weiterer Aufwand bezüglich der Herstellung und Vorhaltung entsprechender Abdeckungen erforderlich ist. Zudem besitzen aktive Geräte häufig keine integrierten Netzteile und arbeiten mit Stecker-oder Aufputznetzteilen unterschiedlichster Bauform. Die notwendige Verbindung zwischen den Netzteilen und den aktiven Geräten stellen bei der gewünschten Kombination mit 230 Volt-Geräten in einer Unterverteilung ein weiteres Problem dar, da diese Leitungen keine 230 Volt-Leitungen kreuzen oder unzulässig annähern dürfen, was unter Praxisgesichtspunkten kaum realisierbar ist. Dies führt in der Regel heute dazu, dass eine zweite Unterverteilung ausschließlich für die Netzwerktechnikkomponenten installiert wird, was unter Kosten- /Nutzenaspekten keine vorteilhafte Lösung darstellt.

Aus der WO-A-0223676 ist ein elektrotechnisches Gerät zum Einbau in Installationsverteilern mit Datentechnikmodulen bekannt. Der Installationsverteiler weist Normschienen auf. Das Gerät ist vollständig mit Kunststoff ummantelt, wobei lediglich Installations-, Anschluss- oder Stecköffnungen in der Frontseite des Mantels ausgespart sind. Es sind Klappen am Mantel angeordnet, so dass ein Fenster im Installationsverteiler vollständig hiermit gefüllt ist.

Ausgehend von diesem Stand der Technik liegt der Erfindung die Aufgabe zugrunde, ein Gerät gattungsgemäßer Art zu schaffen, welches problemlos in einer üblichen Elektrounterverteilung installiert werden kann und zwar insbesondere auch gemeinsam mit 230 Volt-Geräten.

Zur Lösung dieser Aufgabe schlägt die Erfindung vor, dass der Mantel durch ein Gehäuseunterteil und ein Gehäuseoberteil gebildet ist, wobei die Gehäuseteile an der Trennstelle einander überlappende, eine Art Labyrinth bildende Wandteile aufweisen.

Hierdurch wird ein ausreichendes Labyrinth zwischen den beiden Gehäuseteilen sichergestellt, welches den elektrischen Bedingungen genügt.

Grundsätzlich sind die üblichen Geräte mit einem metallischen Gehäuse ausgestattet, wobei auch die Steckbuchsen oder dergleichen mit metallischen Gehäuseteilen ausgestattet sind, um eine entsprechende Abschirmung zu erreichen. Alle diese Elemente sind gemäß der Erfindung durch die Kunststoffummantelung oder das Kunststoffgehäuse abgedeckt, so dass die Sicherheit gemäß Schutzklasse II erreicht wird. Alle Spalte, Fugen, Befestigungsanordnungen und dergleichen sind jeweils so angeordnet, dass mindestens 5 mm Abstand zu den metallischen Flächen des innerhalb der Ummantelung liegenden Gehäuses aus Metall erreicht sind, wodurch die sicherheitstechnischen Bestimmungen erfüllt sind.. Dabei ist das Gerät vollständig mit Kunststoff ummantelt, insbesondere in ein den Mantel bildendes Kunststoffgehäuse eingesetzt ist, wobei lediglich Installations-, Anschluss- oder Stecköffnungen in der Frontseite des Mantels angespart sind, hinter denen Anschlussteile, z.B. Klemmen oder vorzugsweise Steckbuchsen angeordnet sind, wobei Klappen oder Schieber am Mantel angeordnet sind, mittels derer die Öffnungen verschließbar oder abdeckbar sind, und der die Öffnungen und Schieber oder Klappen aufweisende Teilbereich der Frontseite des Mantels so geformt und dimensioniert ist, dass das Fenster der frontseitigen Abdeckung des Installationskleinverteiler vollständig von diesem Bereich gefüllt ist.

Gemäß dieser Ausbildung ist das Gerät derartig mit Kunststoff ummantelt, dass die Einhaltung der Schutzklasse II erreicht wird und die übliche Gerätekontur für Installations- und Einbaugeräte gemäß DIN 43880 eingehalten wird. Damit können diese Geräte problemlos in der Unterverteilung installiert werden, wobei auch eine Mischbestückung mit 230 Volt-Geräten möglich und zulässig ist. Die Befestigung kann dabei an den üblichen Hutschienen erfolgen, wobei die Verwendung der üblichen Abdeckungen sichergestellt ist, so dass die Abdeckungen eingesetzt werden können und durch die Abdeckungen nur die durch das Fenster der Abdeckungen zugreiflichen Bereiche des Gerätes freiliegen.

Bei aktiven Geräten kann eine 230 Volt-Spannungsversorgung integriert sein, wobei auch hier die Sicherheitsbestimmungen erfüllt werden, da zusätzlich zu verlegende Leitungen, die der Installationsanforderung für Schutzkleinspannung entsprechen müssen, entfallen können.

Die Klappen oder Schieber können selbst schließend ausgebildet sind, so dass diese nur zum Anstecken oder dergleichen von Steckelementen geöffnet werden und beim Entnehmen der Steckelemente oder dergleichen diese selbständig in die Schließstellung gelangen. Vorzugsweise sind Anschlussteile in Form von Steckbuchsen üblicher Bauart vorgesehen.

Besonders bevorzugt ist dabei vorgesehen, dass die Frontseite des Mantels einen ersten Teilbereich aufweist, der von der Abdeckung des Installationskleinverteiler überdeckt ist, sowie einen zweiten Teilbereich, der gegenüber dem ersten Teilbereich stufig vorragt und in das Fenster der Abdeckung eingreift sowie gegebenenfalls aus dem Fenster vorragt.

Zudem kann vorgesehen sein, dass das Gerät mit einem elektrischen Netzteil ausgestattet ist.

Insbesondere ist auch vorgesehen ist, dass die Gehäuseteile durch Schrauben oder ähnliche Verbindungsteile aneinander befestigt sind, wobei Schraubeneinführschächte an beiden Gehäuseteilen ausgebildet sind, die durch in Montagesolllage labyrinthartig ineinander gesteckte, hülsenartige Bestandteile der Gehäuseteile geformt sind.

Zudem ist vorgesehen, dass am Boden des Gehäuses feststehende Haken und mindestens ein verschieblicher Haken zum Untergriff einer Hutschiene ausgebildet sind, wobei der verschiebliche Haken von der Gerätefrontseite her betätigbar ist.

Durch diese Ausbildung kann die Montage auf handelsüblichen Hutschienen in einfacher Weise und in exakter Ausrichtung erfolgen.

Eine vorteilhafte Weiterbildung wird darin gesehen, dass neben den Öffnungen des Mantels Lichtleitelemente angeordnet sind, die von der Frontseite sichtbar sind und mit geräteseitig angeordneten Lichtquellen, insbesondere LED, in Wirkverbindung stehen.

Hierdurch sind optische Signalisierungen für den Benutzer leicht erkennbar, ohne dass die sicherheitstechnischen Bedingungen hierdurch eingeschränkt werden.

Ein Ausführungsbeispiel der Erfindung ist in der Zeichnung dargestellt und im Folgenden näher beschrieben.
Es zeigt:
- Figur 1: ein erfindungsgemäßes Elektrotechnisches Gerät in Schrägansicht;

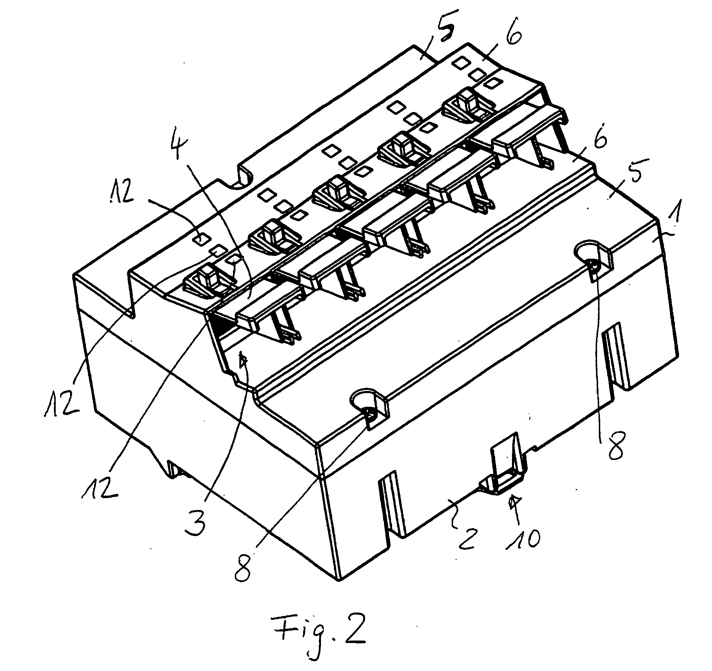

- Figur 2: desgleichen mit geöffneten Zugangsbereichen für das Einführen von Steckern oder dergleichen;

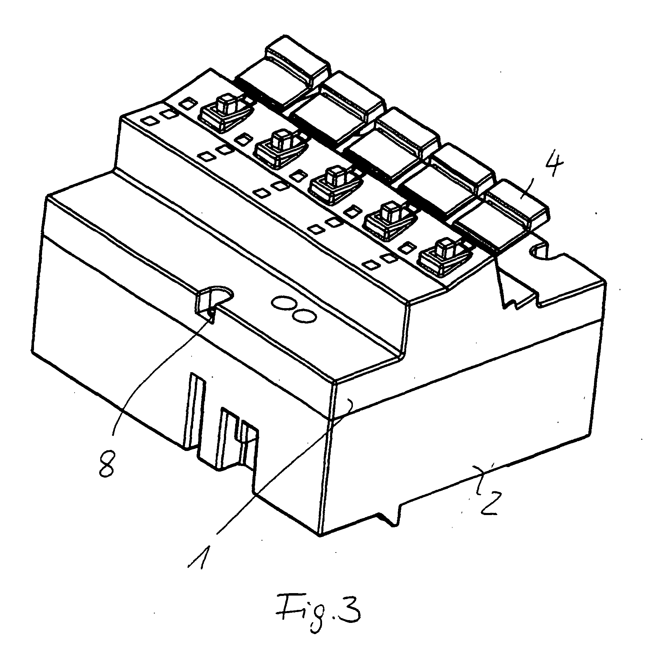

- Figur 3: das Gerät in der Stellung gemäß Figur 2 von schräg hinten gesehen;

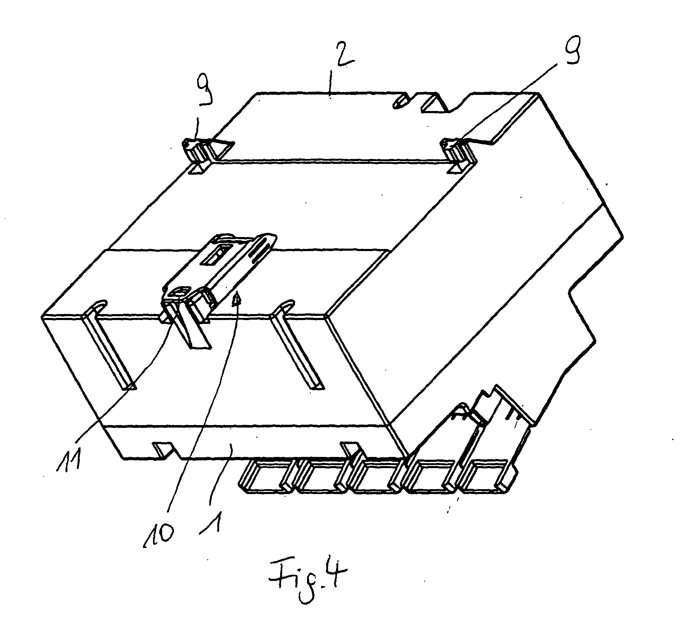

- Figur 4: desgleichen von unten gesehen;
- Figur 5: ein Detail im Schnitt gesehen;

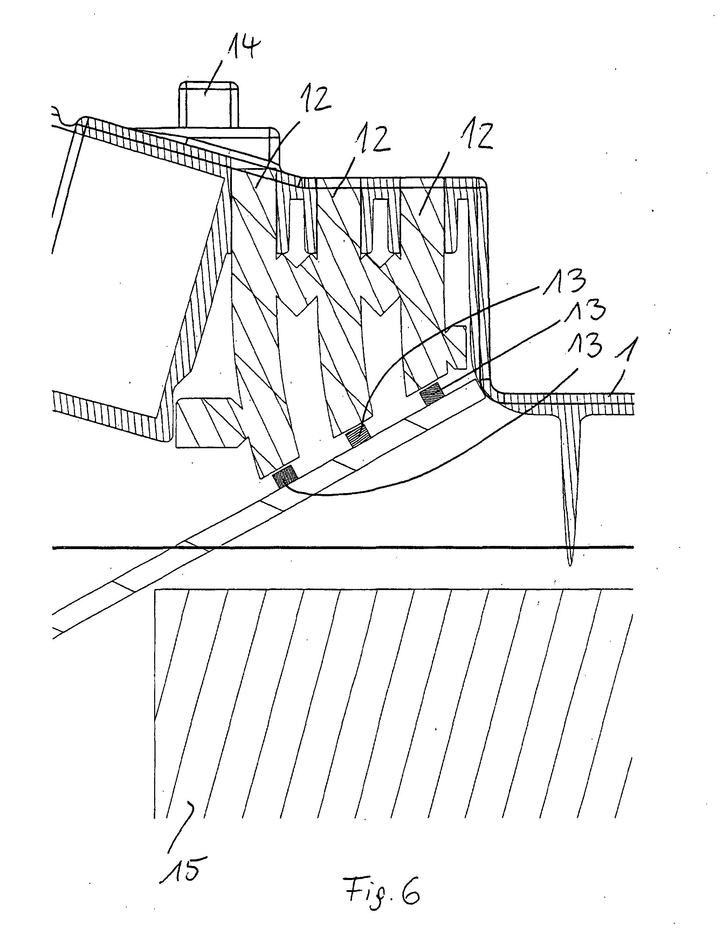

- Figur 6: ein weiteres Detail im Schnitt gesehen;

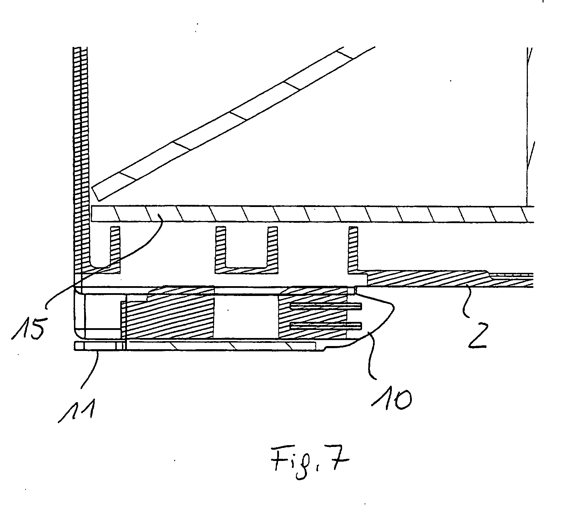

- Figur 7: ein weiteres Detail im Schnitt gesehen;

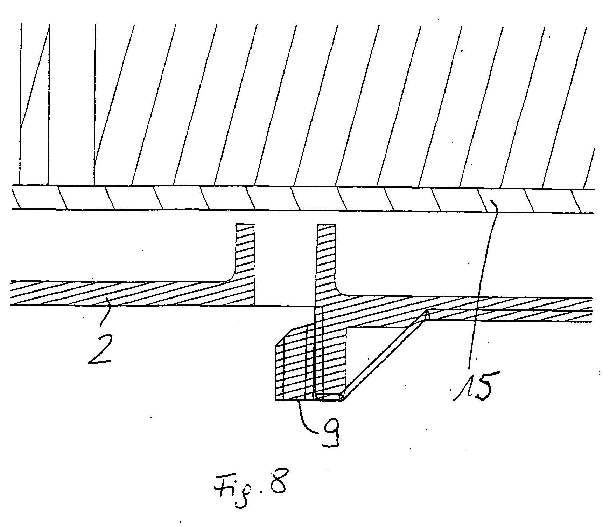

- Figur 8: ein weiteres Detail im Schnitt gesehen.

In den Zeichnungsfiguren ist ein elektrotechnisches Gerät gezeigt, welches zum Einbau in Installationskleinverteiler vorgesehen und bestimmt ist. Es handelt sich um ein Gerät der Schwachstromtechnik, wobei das Gerät innenliegend einen Mantel aus Metall mit Steckbuchsen, die ebenfalls eine metallische Schirmung aufweisen, hat. Das Gerät ist zum Einbau in Installationskleinverteiler bestimmt, die Normschienen zur Halterung von Einbaugeräten aufweisen sowie eine frontseitige Abdeckung mit fensterartigen Ausnehmungen.

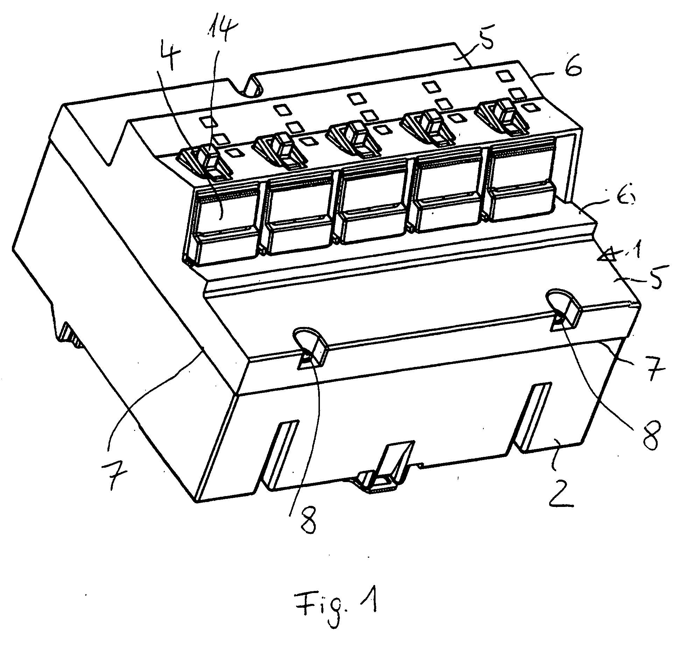

Das Gerät, wie es in Figur 1 beispielsweise gezeigt ist, ist vollständig mit Kunststoff ummantelt, insbesondere in ein den Mantel bildendes Kunststoffgehäuse 1,2 eingesetzt, wobei lediglich Stecköffnungen 3 in der Frontseite des Mantels ausgespart sind, hinter denen Anschlussteile, beispielsweise geschirmte Steckbuchsen, angeordnet sind. Zusätzlich sind Klappen oder Schieber 4 am Mantel gehaltert, mittels derer die Öffnungen 3 abgedeckt werden können. Der die Öffnungen 3 und Schieber 4 aufweisende Bereich der Frontseite des Mantels ist so geformt und dimensioniert, dass das Fenster der frontseitigen Abdeckung des Installationskleinverteiler vollständig von diesem Bereich gefüllt ist.

Dazu weist die Frontseite des Mantels 1 einen ersten Teilbereich 5 auf, der von der Abdeckung des Installationskleinverteiler überdeckt ist, sowie einen zweiten Teilbereich 6, der gegenüber dem ersten Teilbereich 5 stufig vorragt und in das Fenster der Abdeckung eingreift sowie mit Teilen aus dem Fenster vorragt.

Das Gerät, welches innenseitig des Mantels angeordnet ist, kann auch mit einem elektrischen Netzteil ausgestattet sein. Insbesondere ist der Mantel durch ein Gehäuseunterteil 2 und ein Gehäuseoberteil 1 gebildet, wobei die Gehäuseteile 1,2 an der Trennstelle 7 einander überlappend ausgebildet sind, so dass eine labyrinthartige Kriechstrecke zu den innen liegenden metallischen Flächen ausgebildet ist.

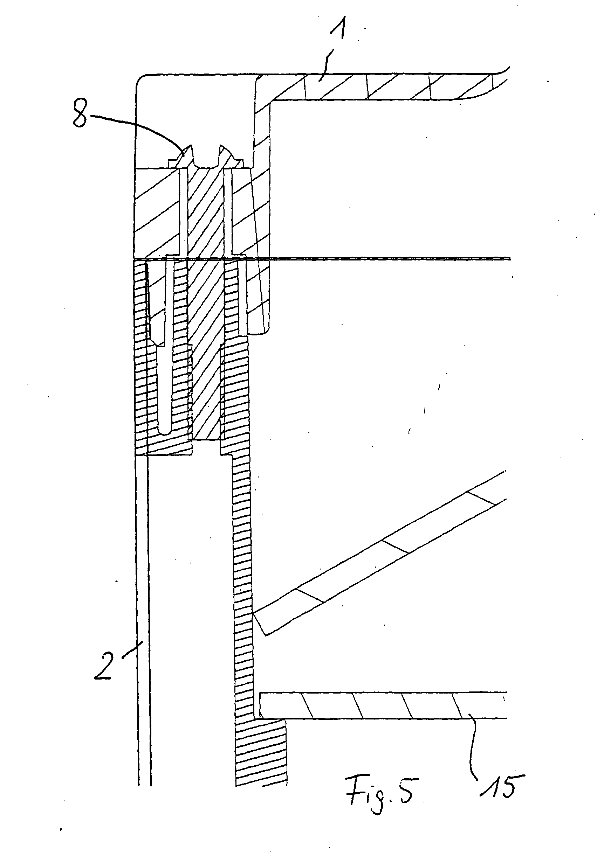

Die Gehäuseteile 1,2 sind durch Schrauben 8 aneinander befestigt, wobei die Schraubeneinführschächte an beiden Gehäuseteilen 1,2 ausgebildet sind und durch in Montagesolllage labyrinthartig ineinander gesteckte hülsenartige Bestandteile der Gehäuseteile geformt sind, wie insbesondere aus Figur 5 ersichtlich ist. Auch hierdurch sind die entsprechenden Kriechstrecken eingehalten.

Am Boden des Gehäuses 2 sind feststehende Haken 9 und ein verschieblicher Haken 10 vorgesehen, die dazu dienen, die entsprechende Hutschiene der Unterverteilung zu untergreifen. Dabei ist der verschiebliche Haken 10 von der Gerätefrontseite her bedienbar, durch eine Bedienhandhabe 11, die beispielsweise mittels der Klinge eines Schraubendrehers zugreiflich ist.

Neben den Öffnungen 3 des Mantels 1,2 sind Lichtleitelemente 12 angeordnet, die von der Frontseite her gut sichtbar sind und mit geräteseitig angeordneten Lichtquellen 13, beispielsweise LED, in optischer Verbindung stehen, so dass das von den Lichtquellen 13 ausgehende Licht zur sichtbaren Frontfläche des Gehäuses geführt ist, ohne dass dazu elektrische Verbindungen vorgesehen sind. Zusätzlich ist noch eine Bedientaste 14 im Bereich der jeweiligen Öffnung 3 vorgesehen, mittels derer die Entrastung eines eingesteckten Steckers erfolgen kann.

Das innenliegende Gerät, welches von dem Mantel 1,2 abgeschirmt ist, ist beispielsweise bei 15 angegeben.

Die Erfindung stellt ein datentechnisches Gerät zur Verfügung, welches zum Einbau in übliche Unterverteilungen geeignet ist und die Sicherheitsbestimmungen der Schutzklasse II erfüllt. In der Ausführungsform, die in den Zeichnungen beschrieben ist, weist das Gerät fünf durch Klappen 4 verschließbare Öffnungen 3 auf. Es ist selbstverständlich möglich, auch mehr oder weniger entsprechende Eingänge zur Verfügung zu stellen. Es sind auch mehrere Geräte dieser Art nebeneinander auf einer Hutschiene anzuordnen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Elektrotechnisches Gerät (15) zum Einbau in Installationskleinverteiler, insbesondere Gerät (15) der Schwachstromtechnik wie Datentechnik, Fernmeldetechnik, Alarm- und Signaltechnik, vorzugsweise in Form eines Patch-Panel, wobei der Installationskleinverteiler Normschienen, insbesondere Hutschienen, zur Halterung von Einbaugeräten aufweist sowie eine frontseitige Abdeckung mit fensterartigen Ausnehmungen, wobei das Gerät (15) vollständig mit Kunststoff ummantelt ist, insbesondere in ein den Mantel (1,2) bildendes Kunststoffgehäuse eingesetzt ist, wobei lediglich Installations-, Anschluss- oder Stecköffnungen (3) in der Frontseite des Mantels (1,2) angespart sind, hinter denen Anschlussteile, z.B. Klemmen oder vorzugsweise Steckbuchsen angeordnet sind, wobei Klappen oder Schieber (4) am Mantel (1,2) angeordnet sind, mittels derer die Öffnungen (3) verschließbar oder abdeckbar sind, und der die Öffnungen (3) und Schieber (4) oder Klappen aufweisende Teilbereich (6) der Frontseite des Mantels so geformt und dimensioniert ist, dass das Fenster der frontseitigen Abdeckung des Installationskleinverteiler vollständig von diesem Bereich gefüllt ist, **dadurch gekennzeichnet, dass** der Mantel (1,2) durch ein Gehäuseunterteil (2) und ein Gehäuseoberteil (1) gebildet ist, wobei die Gehäuseteile (1,2) an der Trennstelle (7) einander überlappende, eine Art Labyrinth bildende Wandteile aufweisen.

2. Elektrotechnisches Gerät nach Anspruch 1, **dadurch gekennzeichnet, dass** die Frontseite des Mantels (1) einen ersten Teilbereich (5) aufweist, der von der Abdeckung des Installationskleinverteiler überdeckt ist, sowie einen zweiten Teilbereich (6), der gegenüber dem ersten Teilbereich (5) stufig vorragt und in das Fenster der Abdeckung eingreift sowie gegebenenfalls aus dem Fenster vorragt.

3. Elektrotechnisches Gerät nach Anspruch 1 oder 2, **dadurch gekennzeichnet, dass** das Gerät (15) mit einem elektrischen Netzteil ausgestattet ist.

4. Elektrotechnisches Gerät nach einem der Ansprüche 1 - 3, **dadurch gekennzeichnet, dass** die Gehäuseteile (1,2) durch Schrauben (8) oder ähnliche Verbindungsteile aneinander befestigt sind, wobei Schraubeneinführschächte an beiden Gehäuseteilen (1,2) ausgebildet sind, die durch in Montagesolllage labyrinthartig ineinander gesteckte, hülsenartige Bestandteile der Gehäuseteile (1,2) geformt sind.

5. Elektrotechnisches Gerät nach einem der Ansprüche 1 bis 4, **dadurch gekennzeichnet, dass** am Boden des Gehäuses (2) feststehende Haken (9) und mindestens ein verschieblicher Haken (10) zum Untergriff einer Hutschiene ausgebildet sind, wobei der verschiebliche Haken (10) von der Gerätefrontseite her betätigbar ist.

6. Elektrotechnisches Gerät nach einem der Ansprüche 1 bis 5, **dadurch gekennzeichnet, dass** neben den Öffnungen (3) des Mantels (1) Lichtleitelemente (12) angeordnet sind, die von der Frontseite sichtbar sind und mit geräteseitig angeordneten Lichtquellen (13), insbesondere LED, in Wirkverbindung stehen.

## Claims

1. Electrical apparatus (15) for mounting in an installation cabinet, in particular an apparatus (15) from light-current electrical engineering such as data systems technology, telecommunications, alarm technology and signal technology, preferably in the form of a patch panel, wherein the installation cabinet has standard rails, in particular top hat rails, for holding built-in devices, and also a front cover with window-like cut-outs, wherein the apparatus (15) is completely covered with plastic, in particular is placed in a plastic housing that forms the casing (1, 2), wherein only installation, connection or plug openings (3) are made in the front of the casing (1, 2), behind which there are connecting parts, for example terminals or preferably socket contacts, wherein arranged on the casing (1, 2) are flaps or slides (4), by means of which the openings (3) can be closed or covered, and the part-area (6) of the front of the casing which has the openings (3) and slides (4) or flaps is shaped and dimensioned such that the window of the front cover of the installation cabinet is completely filled by this area, **characterized in that** the casing (1, 2) is formed by a housing lower part (2) and a housing upper part (1), wherein the housing parts (1, 2) have at the point of separation (7) wall parts which overlap one another and form a type of labyrinth.

2. Electrical apparatus according to Claim 1, **characterized in that** the front of the casing (1) has a first part-area (5) which is covered by the cover of the installation cabinet, and a second part-area (6) which protrudes in a stepped manner with respect to the first part-area (5) and engages in the window of the cover and possibly also protrudes out of the window.

3. Electrical apparatus according to Claim 1 or 2, **characterized in that** the apparatus (15) is equipped with an electrical power supply.

4. Electrical apparatus according to one of Claims 1 to 3, **characterized in that** the housing parts (1, 2) are attached to one another by screws (8) or the like, wherein screw insertion holes are formed on both housing parts (1, 2), said screw insertion holes being formed by sleeve-like components of the housing parts (1, 2) that are inserted into one another in a labyrinth-like manner in the desired assembled position.

5. Electrical apparatus according to one of Claims 1 to 4, **characterized in that** fixed hooks (9) and at least one displaceable hook (10) are formed on the bottom of the housing (2) for fixing to a top hat rail, wherein the displaceable hook (10) can be operated from the front of the apparatus.

6. Electrical apparatus according to one of Claims 1 to 5, **characterized in that** arranged next to the openings (3) of the casing (1) are light guide elements (12) which are visible from the front and are effectively connected to light sources (13), in particular LEDs, on the apparatus.

## Revendications

1. Appareil électrique (15) pour le montage dans un petit tableau de distribution, en particulier appareil (15) de la technique des courants faibles par exemple en informatique, télécommunication, technique d'alarme et de signalisation, de préférence sous la forme d'un panneau de raccordement, le petit tableau de distribution présentant de préférence des rails normalisés, en particulier des profilés chapeau pour la fixation d'appareils à monter ainsi qu'un couvercle frontal avec des évidements de type fenêtre, l'appareil (15) étant entièrement enveloppé de plastique, en particulier placé dans un boîtier en plastique formant l'enveloppe (1, 2), des ouvertures d'installation, de raccordement ou d'enfichage (3) étant seulement ménagées dans la face avant de l'enveloppe (1, 2), derrière lesquelles sont disposées des pièces de raccordement, par exemple des bornes ou de préférence des fiches femelles, des volets ou des tiroirs (4) étant disposés sur l'enveloppe (1, 2), au moyen desquels les ouvertures (3) peuvent être obturées ou recouvertes, et la zone (6) de la face avant de l'enveloppe qui présente les ouvertures (3) et les volets ou tiroirs (4) étant formée et dimensionnée de telle manière que la fenêtre du couvercle frontal du petit tableau de distribution est entièrement remplie par cette zone, **caractérisé par le fait que** l'enveloppe (1, 2) est formée d'une partie inférieure de boîtier (2) et d'une partie supérieure de boîtier (1), les parties de boîtier (1, 2) présentant des parties de paroi formant un genre de labyrinthe, se recouvrant l'une l'autre à la jointure (7).

2. Appareil électrique selon la revendication 1, **caractérisé par le fait que** la face avant de l'enveloppe présente une première zone (5) qui est recouverte par le couvercle du petit tableau de distribution et une deuxième zone (6) qui fait saillie en gradin par rapport à la première zone (5) et s'engage dans la fenêtre du couvercle ou dépasse le cas échéant de la fenêtre.

3. Appareil électrique selon la revendication 1 ou 2, **caractérisé par le fait que** l'appareil (15) est équipé d'un bloc d'alimentation électrique.

4. Appareil électrique selon l'une des revendications 1 à 3, **caractérisé par le fait que** les parties de boîtier (1, 2) sont fixées l'une sur l'autre par des vis (8) ou des pièces d'assemblage analogues, des puits de vis étant réalisés sur les deux parties de boîtier (1, 2), lesquels sont formés d'éléments en forme de douille des parties de boîtier (1, 2) enfichés l'un dans l'autre en labyrinthe dans la position de montage désirée.

5. Appareil électrique selon l'une des revendications 1 à 4, **caractérisé par le fait que** des crochets fixes (9) et au moins un crochet réglable (10) sont formés sur le fond du boîtier (2) pour le montage sur un profilé chapeau, le crochet réglable (10) étant manoeuvrable depuis la face avant de l'appareil.

6. Appareil électrique selon l'une des revendications 1 à 5, **caractérisé par le fait qu'**à côté des ouvertures (3) de l'enveloppe (1) sont disposés des éléments de guidage optique (12) qui sont visibles depuis la face avant et sont en interaction avec des sources de lumière (13), en particulier des LED, disposées côté appareil.
